# EUROPÄISCHE PATENTSCHRIFT

(11) **EP 2 879 979 B1**
(45) Veröffentlichungstag und Bekanntmachung des Hinweises auf die Patenterteilung: **09.11.2016**
(21) Anmeldenummer: 12784355.5
(22) Anmeldetag: 10.09.2012
(51) Int. Cl.: B65G 61/00, B65G 47/91, B65G 1/00

(54) **VERFAHREN ZUM KOMMISSIONIEREN UND KOMMISSIONIERVORRICHTUNG**
PICKING METHOD AND PICKING DEVICE
PROCÉDÉ DE PRÉPARATION DE COMMANDES ET DISPOSITIF DE PRÉPARATION DE COMMANDES

(30) Priorität: 01.08.2012 PL 40021612
(43) Veröffentlichungstag der Anmeldung: 10.06.2015
(73) Patentinhaber: Nutrifarm SP. Z.O.O., 39 -200 Debica (PL)
(72) Erfinder: JEDLINSKI, Marcin, PL-39 -200 Debica (PL); JEDLINSKI, Rafal, PL-39 -200 Debica (PL); SZTOGRIN, Artur, PL-39 -200 Debica (PL)
(74) Vertreter: Górska, Anna
(86) Internationale Anmeldenummer: PCT/PL2012/000082
(87) Internationale Veröffentlichungsnummer: WO 2014/021724

(56) Entgegenhaltungen:
- EP-A1- 0 217 450
- DE-A1- 19 959 285
- US-A1- 2010 222 915

## Beschreibung

Die Erfindung betrifft ein Verfahren zum Kommissionieren, wobei wenigstens ein zu kommissionierender erster Gegenstand von einer Quell-Ladeeinheit in eine Ziel-Ladeeinheit mittels einer Greifvorrichtung befördert wird. Die Erfindung betrifft auch eine Kommissioniervorrichtung zum Durchführen des erfindungsgemäßen Verfahrens.

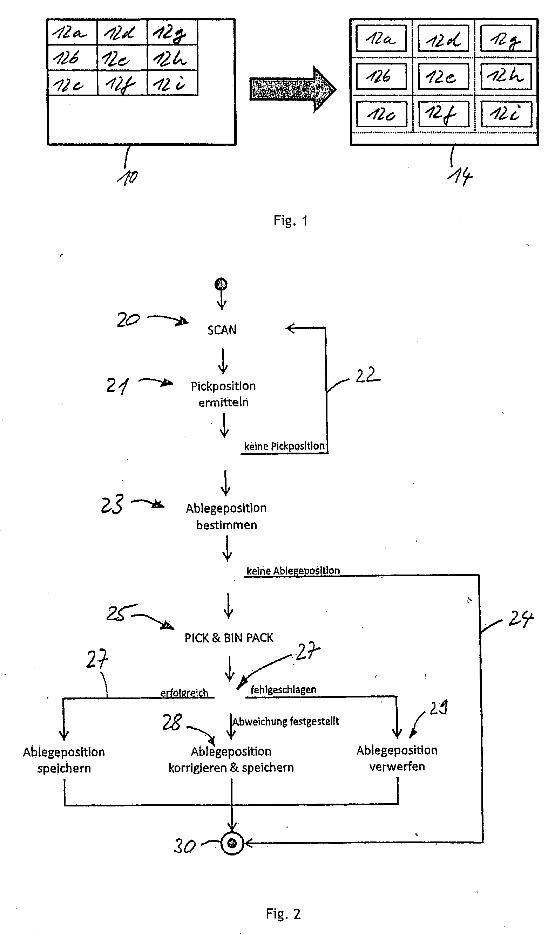

Bei konventionellen Verfahren und Vorrichtungen zum Kommissionieren kommt es sowohl beim Greifen von Gegenständen aus einer Quell-Ladeeinheit als auch beim Ablegen in einer Ziel-Ladeeinheit zu Ungenauigkeiten. Werden beispielsweise die Gegenstände in der Quell-Ladeeinheit nicht exakt in der vom Rechner vorgegebenen zentrischen Position gegriffen, so kann dieser Gegenstand im Zielbehälter zwangsläufig nicht exakt an der vorausberechneten Ablegeposition abgesetzt werden, sondern wird eben leicht versetzt zu der berechneten Ablegeposition positioniert. Zwangsläufig kommt es dadurch beim Ablegen der Gegenstände in der Ziel-Ladeeinheit zu Problemen. Bei konventionellen Verfahren und Vorrichtungen zum Kommissionieren wird hier Abhilfe durch die Einführung eines Sicherheitsabstands geschaffen. Dies ist anhand der Fig. 1 verdeutlicht. Aus einer Quell-Ladeeinheit 10 werden insgesamt neun Gegenstände 12a bis 12i nacheinander mit einer Greifvorrichtung aufgenommen und dann in einer Ziel-Ladeeinheit abgesetzt. Um Probleme beim Ablegen in der Ziel-Ladeeinheit 14 zu vermeiden, wird ein Sicherheitsabstand um die berechneten Ablegepositionen eingeführt. In der Darstellung der Fig. 1 sind alle Gegenstände 12a bis 12i exakt auf der berechneten Ablegeposition abgesetzt, allerdings ist jede Ablegeposition von einem Sicherheitsabstand an vier Seiten umgeben, was durch die punktierten Linie in der Ziel-Ladeeinheit 14 angedeutet ist. Infolgedessen leidet das Packmuster, da die Gegenstände 12a bis 12i in der Ziel-Ladeeinheit 14 nicht mehr so dicht beieinander liegen wie in der Quell-Ladeeinheit 10. Dies führt dazu, dass das theoretische Fassungsvermögen der Ziel-Ladeeinheit 14 aufgrund des vorzusehenden Sicherheitsabstandes, um wiederum Probleme beim Ablegen der Gegenstände 12a bis 12i in der Ziel-Ladeeinheit 14 zu vermeiden, nicht vollständig ausgenutzt werden kann.

Das Dokument EP 0 217 450 A1 wird als nächstliegender Stand der Technik gegenüber dem Verfahren zum Kommissionieren des Anspruchs 1. Anspruch 6 ist gegenüber diesem Dokument abgegrenzt.

Mit der Erfindung soll ein Verfahren und eine Vorrichtung zum Kommissionieren verbessert werden.

Erfindungsgemäß ist hierzu ein Verfahren zum Kommissionieren vorgesehen, wobei wenigstens ein zu kommissionierender erster Gegenstand von einer Quell-Ladeeinheit in eine Ziel-Ladeeinheit mittels einer Greifvorrichtung befördert wird, bei dem die folgenden Schritte vorgesehen sind:
- Scannen der Quell- Ladeeinheit und Bestimmen einer Pick-Position eines mit der Greifvorrichtung aufzunehmenden Gegenstandes in der Quell-Ladeeinheit,
- Aufnehmen des ersten Gegenstandes in der Quell-Ladeeinheit, Berechnen einer Soll-Ablegeposition für den ersten Gegenstand in der Ziel-Ladeeinheit, wobei die Soll-Ablegeposition an eine Berandung der Ziel-Ladeeinheit und/oder an wenigstens einen bereits in der Ziel-Ladeeinheit befindlichen zweiten Gegenstand angrenzt,
- Bewegen des ersten Gegenstandes zu einer Zwischenposition, wobei sich die Zwischenposition aus der berechneten Soll-Ablegeposition in der Ziel-Ladeeinheit und einem Sicherheitsabstand von der Berandung der Ziel-Ladeeinheit und/oder wenigstens einem bereits in der Ziel-Ladeeinheit befindlichen zweiten Gegenstand ergibt und
- ausgehend von der Zwischenposition, Bewegen des ersten Gegenstandes in Richtung auf die Soll-Ablegeposition bis zum Erreichen der Soll-Ablegeposition, bis die Bewegung durch Anstoßen an die Berandung der Ziel-Ladeeinheit und/oder Anstoßen an den zweiten Gegenstand an einer Ist-Ablegeposition gestoppt wird.

Indem ausgehend von der Zwischenposition der Gegenstand noch mit der Greifvorrichtung in Richtung auf die Soll-Ablegeposition bewegt wird, kann der Gegenstand bis unmittelbar an die vorgesehene Soll-Ablegeposition bewegt werden. Wenn die Soll-Ablegeposition nicht erreicht werden kann, beispielsweise weil sie durch Ungenauigkeiten eine Begrenzung der Ziel-Ladeeinheit teilweise einschließt, dann wird die Bewegung gestoppt, sobald der Gegenstand an eine Berandung der Ziel-Ladeeinheit und/oder an einem zweiten Gegenstand anstößt. Die dann erreichte Position wird als die Ist-Ablegeposition bezeichnet. Indem nun also ein Gegenstand in der Ziel-Ladeeinheit gemäß der Erfindung bis an eine Berandung verschoben wird, kann der Sicherheitsabstand in der Ist-Ablegeposition vollständig eliminiert werden und das Fassungsvermögen der Ziel-Ladeeinheit kann voll ausgenutzt werden.

In Weiterbildung der Erfindung wird die Ziel-Ladeeinheit an einer vordefinierten Position und in einer vordefinierten Ausrichtung angeordnet. Vorteilhafterweise wird auch die Quell-Ladeeinheit an einer vordefinierten Position und in einer vordefinierten Ausrichtung angeordnet. Das Anordnen von Ziel-Ladeeinheit und/oder Quell-Ladeeinheit an exakt vordefinierten Positionen und in exakt vordefinierter Ausrichtung erleichtert die Berechnung der Pick-Position und der Ablegepositionen, da die Berandungen der Ziel-Ladeeinheit und der Quell-Ladeeinheit dann bereits bekannt sind und nicht berechnet und/oder durch Abscannen erfasst werden müssen. Das erfindungsgemäße Verfahren kann dadurch schnell durchgeführt werden, da weniger Rechenzeit benötigt wird.

In Weiterbildung der Erfindung wird die erreichte Ist-Ablegeposition abgespeichert. In Weiterbildung der Erfindung erflogt das Berechnen der Soll-Ablegeposition unter Berücksichtigung der Ist-Ablegepositionen bereits in der Ziel-Ladeeinheit befindlicher Gegenstände.

Auf diese Weise kann die tatsächliche Belegung der Ziel-Ladeeinheit bei der Berechnung der Soll-Ablegepositionen berücksichtigt werden, um das Fassungsvermögen der Ziel-Ladeeinheit noch besser ausnutzen zu können. Indem nämlich die Ist-Ablegeposition abgespeichert wird, kann eine Zwischenposition des nächsten, in der Ziel-Ladeeinheit abzulegenden Gegenstands bereits ausgehend von der Ist-Ablegeposition zzgl. eines Sicherheitsabstandes berechnet werden. Infolgedessen ist die Strecke, die der zweite Gegenstand in Richtung auf seine Soll-Ablegeposition bewegt werden muss, kürzer, als wenn die Ist Ablegeposition des ersten abgelegten Gegenstandes nicht berücksichtigt würde.

In Weiterbildung der Erfindung ist das Scannen der Quell-Ladeeinheit und das Bestimmen einer Pick-Position eines mit der Greifvorrichtung aufzunehmenden Gegenstandes in der Quell-Ladeeinheit vorgesehen.

Auf diese Weise können auch unterschiedlich beladene Quell-Ladeeinheiten oder mit unterschiedlichen Gegenständen beladene Quell-Ladeeinheiten problemlos bei dem erfindungsgemäßen Verfahren verwendet werden. Das erfindungsgemäße Verfahren ist dadurch in flexibler Weise einsetzbar.

Das der Erfindung zugrunde liegenden Problem wird auch durch eine Kommissioniervorrichtung zum Durchführen des erfindungsgemäßen Verfahrens gelöst, die einen bewegbaren Arm, eine an dem Arm angeordnete Greifvorrichtung und eine Steuereinheit zur Steuerung des Arms und der Greifvorrichtung aufweist, wobei der Arm mit einem Anstoßsensor versehen ist, der ein Abstoppen einer Bewegung eines mit der Greifvorrichtung gehaltenen Gegenstandes in wenigstens einer Raumrichtung detektiert.

Durch Vorsehen eines Anstoßsensors kann exakt erfasst werden. wann ein in der Ziel-Ladeeinheit abzulegender Gegenstand an einer Berandung der Ziel-Ladeeinheit oder an einem bereits in der Ziel-Ladeeinheit befindlichen zweiten Gegenstand anstößt. Der Anstoßsensor kann an dem Arm angeordnet werden, der die Greifvorrichtung führt. Das Anstoßen an der Berandung oder an einem zweiten Gegenstand definiert die Ist-Ablegeposition wenigstens in einer Raumrichtung. Mittels der erfindungsgemäßen Kommissioniervorrichtung kann dadurch in einfacher Weise erreicht werden, dass ein Sicherheitsabstand zwischen Gegenständen in der Ziel-Ladeeinheit vollständig eliminiert werden kann und das Fassungsvermögen so gut wie möglich ausgenutzt werden kann.

In Weiterbildung der Erfindung ist die Greifvorrichtung mit einer Ansaugvorrichtung zum Halten eines zu kommissionierenden Gegenstandes versehen.

Mittels einer Ansaugvorrichtung können auch unterschiedlich große Gegenstände von ihrer Oberseite her aufgenommen werden, beispielsweise Pappschachteln, die ohne Zwischenraum in einer Wanne nebeneinander angeordnet sind. Es ist dann nicht ohne weiteres möglich, mit einem Greifer an den Seitenflächen der Pappkartons anzugreifen. Mit einer Ansaugvorrichtung können die Gegenstände aber dann in einfacher Weise zuverlässig aufgenommen und gehalten werden. Die Ansaugvorrichtung selbst sowie ein Abschnitt des Arms unmittelbar angrenzend und oberhalb der Ansaugvorrichtung weist dann vorteilhafterweise einen Querschnitt auf, der kleiner oder gerade so groß ist wie der Querschnitt eines kleinsten aufzunehmenden Gegenstandes. Auf diese Weise können auch in mehreren Schichten beladene Behälter oder kleine Gegenstände aus Quell-Ladeeinheiten mit hohen Wänden problemlos aufgenommen werden.

Gemäß der Erfindung ist der Arm mit wenigstens einer Ausgleichseinheit versehen, wobei der Anstoßsensor eine Verschiebung zweier Bauteile der Ausgleichseinheit detektiert. Die Verschiebung zweier Bauteile der Ausgleichseinheit lässt eine sichere Detektion des Anstoßens eines abzulegenden Gegenstandes an eine Berandung der Ziel-Ladeeinheit oder an einen bereits in der Ziel-Ladeeinheit befindlichen Gegenstand zu. Als Ausgleichseinheit können an und für sich konventionelle Ausgleichseinheiten verwendet werden, die bei Industrierobotern dazu verwendet werden. um nicht exakt an der vorberechneten Position befindliche Gegenstände bearbeiteten zu können. Beispielsweise werden solche Ausgleichseinheiten verwendet, wenn Bolzen aus einer Bohrung entnommen werden sollen. Der Roboter fährt mit seiner Greifvorrichtung dann eine Position an, an der sich die Bohrung mit dem Bolzen nach der Vorausberechnung befinden sollte. Befindet sich der Bolzen aber seitlich verschoben zu der berechneten Position, dann kann er mit der Greifvorrichtung zwar ergriffen werden, das Ergreifen des Bolzens führt dann aber zu einer seitlichen Verschiebung der Ausgleichseinheit, wodurch die Toleranz der Bohrung bzw. des Bolzens ausgeglichen wird. Die Ausgleichseinheit sorgt dann aber dafür, dass der Bolzen in der vorgesehenen Richtung entnommen werden kann und beim Entnehmen nicht verkippt. Solche Ausgleichseinheiten können gemäß der Erfindung für alle drei Raumrichtungen eingesetzt werden, um ein Anstoßen eines abzulegenden Gegenstandes in allen drei Raumrichtungen zu detektieren.

In Weiterbildung der Erfindung weißt der Greifarm zwei Ausgleichseinheiten auf, wobei eine erste Ausgleichseinheit ein Abstoppen einer Bewegung in x- und/oder y-Richtung und eine zweite Ausgleichseinheit ein Abstoppen einer Bewegung in z-Richtung detektiert.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1:: eine schematische Darstellung der Verhältnisse bei einer Kommissioniervorrichtung gemäß dem Stand der Technik,
- Fig. 2:: ein Ablaufdiagramm des erfindungsgemäßen Kommissionierverfahrens,
- Fig. 3:: eine schematische Darstellung einer Ziel-Ladeeinheit mit einer eingezeichneten Soll-Ablegeposition,
- Fig. 4:: eine schematische Darstellung einer Ziel-Ladeeinheit mit einem abzulegenden Gegenstand in einer Zwischenposition,
- Fig. 5:: eine Ziel-Ladeeinheit mit einem in der Soll-Ablegeposition befindlichen Gegenstand,
- Fig. 6:: eine Ziel-Ladeeinheit mit einem in einer Ist-Ablegeposition befindlichen Gegenstand,
- Fig. 7:: eine schematische Darstellung einer erfindungsgemäßen Kommissioniervorrichtung,
- Fig. 8:: eine schematische Darstellung eines Abschnitts eines Greifarms der Kommissioniervorrichtung der Fig. 7,
- Fig. 9:: zwei schematische Darstellungen zur Verdeutlichung der Funktion einer x-y-Ausgleichseinheit an dem Greifarm der Kommissioniervorrichtung der Fig. 7 und
- Fig. 10:: zwei Darstellungen zur Verdeutlichung der Funktion einer z-Ausgleichseinheit an dem Greifarm der Kommissioniervorrichtung der Fig. 7.

Die Darstellung der Fig. 2 zeigt ein Ablaufdiagramm des erfindungsgemäßen Kommissionierverfahrens. Nach dem Start des Verfahrens wird bei Schritt 20 eine Quell-Ladeeinheit abgescannt und nachfolgend wird bei Schritt 21 eine Pickposition in der Quell-Ladeeinheit ermittelt, also die Position eines aufzunehmenden Gegenstandes in der Quell-Ladeeinheit. Bei einer bevorzugten Ausführungsform des erfindungsgemäßen Verfahrens befindet sich die Quell-Ladeeinheit an einer vordefinierten Position und in einer vordefinierten Ausrichtung. Die Berandung der Quell-Ladeeinheit muss durch den Abscannvorgang also nicht erfasst werden, diese wird als bekannt vorausgesetzt. Dies erleichtert die Ermittlung der Pick-Position und vereinfacht auch die Auslegung einer Greifvorrichtung und eines Armes bei einer erfindungsgemäßen Kommissioniervorrichtung.

Kann bei Schritt 21 keine Pick-Position ermittelt werden, so springt das Verfahren gemäß dem Pfeil 22 wieder zurück zu Schritt 20.

Im nächsten Schritt 23 wird eine Soll-Ablegeposition für den aufzunehmenden Gegenstand in der Ziel-Ladeeinheit bestimmt. Gemäß der bevorzugten Ausführungsform des erfindungsgemäßen Verfahrens befindet sich auch die Ziel-Ladeeinheit an einer vordefinierten Position und in einer vordefinierten Ausrichtung. Dies erleichtert die Berechnung der Soll-Ablegeposition in der Ziel-Ladeeinheit. Bei der Berechnung der Soll-Ablegeposition in der Ziel-Ladeeinheit werden Ist-Ablegepositionen von bereits in der Ziel-Ladeeinheit befindlichen Gegenständen berücksichtigt. Die Soll-Ablegeposition in der Ziel-Ladeeinheit wird dann so ermittelt, dass sie an eine Berandung der Ziel-Ladeeinheit und/oder an bereits in der Ziel-Ladeeinheit befindliche Gegenstände angrenzt. Die Soll-Ablegeposition wird bezüglich aller drei Raumrichtungen x, y und z festgelegt, da beispielsweise auch die Beladung der Ziel-Ladeeinheit in mehreren Schichten von Gegenständen möglich ist.

Kann bei Schritt 23 keine Soll-Ablegeposition ermittelt werden, beispielsweise weil die Ziel-Ladeeinheit bereits voll belegt ist, springt das Verfahren gemäß dem Pfeil 24 zu einem Endpunkt 30.

Kann hingegen im Schritt 23 eine Ablegeposition bestimmt werden, so wird im Schritt 25 der an der im Schritt 21 ermittelten Pick-Position befindliche Gegenstand mittels der Greifvorrichtung in der Quell-Ladeeinheit aufgenommen und wird zu einer Zwischenposition in der Ziel-Ladeeinheit bewegt. Die Zwischenposition in der Ziel-Ladeeinheit ergibt sich aus der im Schritt 23 bestimmten Soll-Ablegeposition in der Ziel-Ladeeinheit und einem Sicherheitsabstand von der Berandung der Ziel-Ladeeinheit und/oder einem Sicherheitsabstand von wenigstens einem bereits in der Ziel-Ladeeinheit befindlichen zweiten Gegenstand. Dieser Sicherheitsabstand wird in allen drei Raumrichtungen berücksichtigt, also in der x- , y- und z-Richtung.

Ausgehend von der Zwischenposition wird in Schritt 25 dann der erste Gegenstand in Richtung auf die Soll-Ablegeposition aus Schritt 23 bewegt, bis entweder die Soll-Ablegeposition erreicht ist oder bis die Bewegung des Gegenstandes durch Anstoßen an die Berandung der Ziel-Ladeeinheit und/oder durch Anstoßen an den wenigstens einen zweiten Gegenstand gestoppt und dies durch einen Anstoßsensor detektiert und signalisiert wird. Sobald die Bewegung in Richtung auf die Soll-Ablegeposition in allen drei Raumrichtungen durchgeführt ist, befindet sich der Gegenstand dann an der Soll-Ablegeposition oder an einer Ist-Ablegeposition. Befindet sich der Gegenstand in der Soll-Ablegeposition, so wird gemäß dem Pfeil 26 der Ablegevorgang als erfolgreich bewertet und die erreichte Soll-Ablegeposition wird als Ist-Ablegeposition abgespeichert. Nach dem Abspeichern schreitet das Verfahren weiter zum Ende 30 fort.

Wird im Schritt 27 eine Abweichung zwischen der im Schritt 23 bestimmten Soll-Ablegeposition und der tatsächlich nach dem Anstoßen des Gegenstandes erreichten Ist-Ablegeposition festgestellt, beispielsweise auch nur bezüglich einer oder zwei Koordinaten, so wird die erreichte Ist-Ablegeposition im Schritt 28 abgespeichert und gleichzeitig wird die Soll-Ablegeposition aus Schritt 23 korrigiert. Das Verfahren schreitet dann weiter fort zum Endpunkt 30.

Wird im Schritt 27 festgestellt, dass das Ablegen des Gegenstandes in der Ziel-Ladeeinheit fehlgeschlagen ist, so wird in einem Schritt 29 die in Schritt 23 ermittelte Soll-Ablegeposition verworfen und das Verfahren schreitet dann zum Endpunkt 30 fort. Ein Fehlschlag beim Ablegen kann beispielsweise dadurch verursacht werden, dass die Zwischenposition in der Ziel-Ladeeinheit nicht erreicht werden kann, da der Gegenstand vorher an einen bereits in der Ziel-Ladeeinheit befindlichen Gegenstand oder an eine Berandung der Ziel-Ladeeinheit anstößt.

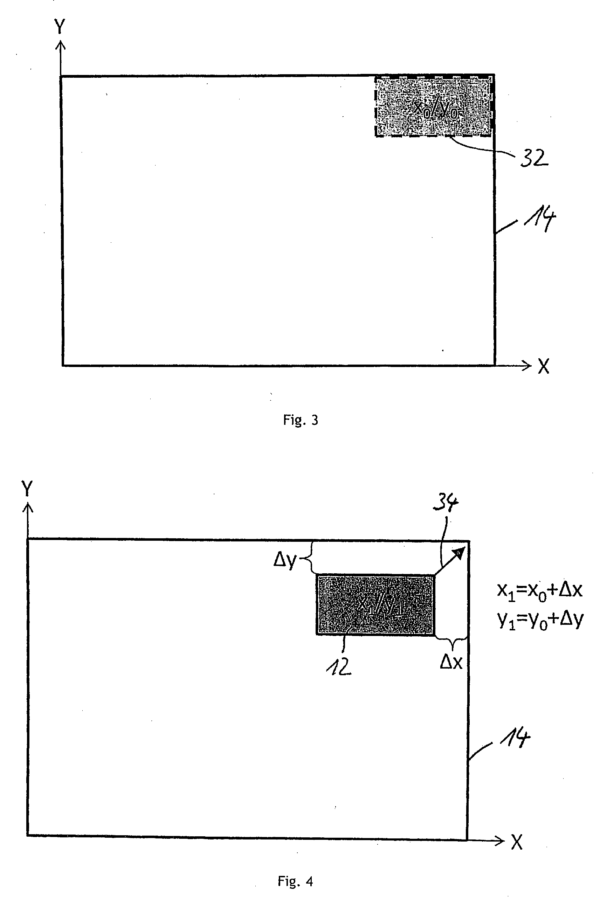

Die Fig. 3 bis 6 sollen nun das erfindungsgemäße Verfahren zum Kommissionieren weiter erläutern, Fig. 3 zeigt eine Ziel-Ladeeinheit 14, und mit gestrichelten Linien innerhalb der Ziel-Ladeeinheit 14 eine Soll-Ablegeposition 32 für einen Gegenstand innerhalb der Ziel-Ladeeinheit 14. Die Soll-Ablegeposition wird nur zur Verdeutlichung lediglich durch die Koordinaten x0, y0 definiert. Tatsächlich wird die Soll-Ablegeposition zweckmäßigerweise durch drei Koordinaten x0, y0, z0 definiert. Die geometrischen Abmessungen des abzulegenden Gegenstandes sind aus einem Lagerverwaltungssystem bekannt, das Informationen über die geometrischen Abmessungen sowie über die Art des Gegenstandes in der Quell-Ladeeinheit enthält. Diese Informationen über die geometrischen Abmessungen des Gegenstandes werden bei der Berechnung der Soll-Ablegeposition berücksichtigt. Die Soll-Ablegeposition kann daher durch die Koordinaten x0, y0 eines abzulegendes Gegenstandes angegeben werden, entsprechend dem Mittelpunkt oder einem sonstigen geeigneten Punkt des abzulegenden Gegenstandes. Wie Fig. 3 zu entnehmen ist, befindet sich der Gegenstand in der berechneten idealen Soll-Ablegeposition in einer Ecke der Ziel-Ladeeinheit 14, wobei der Gegenstand dann mit drei Seitenflächen an der Berandung der Ziel-Ladeeinheit 14 angrenzt, indem er auf dem nicht dargestellten Boden der Ziel-Ladeeinheit 14 aufsteht und an zwei Seitenwänden der Ziel-Ladeeinheit 14 angrenzt.

Fig. 4 zeigt die Ziel-Ladeeinheit 14 mit einem abzulegenden Gegenstand 12, der in einer Zwischenposition mit den Koordinaten x1 , y1 angeordnet ist. Die Zwischenposition ergibt sich aus der berechneten Soll-Ablegeposition durch Berücksichtigung eines Sicherheitsabstandes Δx und Δy von der Soll-Ablegeposition. Auch hier bezeichnen die Koordinaten x1, y1 nur die Koordinaten eines vordefinierten Punkts des abzulegenden Gegenstandes, die Abmessungen des Gegenstandes sind der Steuereinheit bekannt.

Gemäß dem erfindungsgemäßen Verfahren wird der Gegenstand 12 nun ausgehend von der Zwischenposition gemäß dem Pfeil 34 in Richtung auf die Soll-Ablegeposition bewegt. Diese Bewegung kann gleichzeitig in x-Richtung als auch in y-Richtung erfolgen. Wie bereits erörtert wurde, ist in Fig. 4 zur Verdeutlichung lediglich der zweidimensionale Fall dargestellt. Die Bewegung 34 kann auch in drei Achsenrichtungen x, y, z in Richtung auf die Soll-Ablegeposition erfolgen.

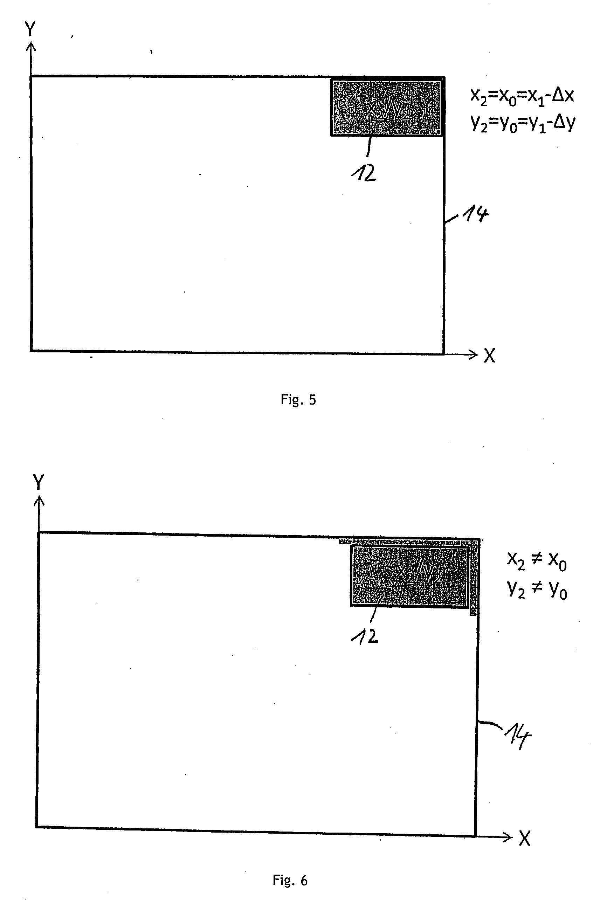

Fig. 5 zeigt dann den Gegenstand 12 in der Ziel-Ladeeinheit 14, nachdem dieser die berechnetet Soll-Ablegeposition erreicht hat. Der Gegenstand 12 befindet sich damit in der rechten oberen Ecke der Ziel-Ladeeinheit 14 und exakt an der in Fig. 3 eingezeichneten Soll-Ablegeposition 32.

Die Darstellung der Fig. 6 zeigt den Gegenstand 12, nachdem dessen Bewegung gemäß dem Pfeil 34 in Fig. 4 durch Anstoßen an die Berandung der Ziel-Ladeeinheit 14 gestoppt wurde. Die Bewegung wurde sowohl in y-Richtung als auch in x-Richtung in einem Abstand von der Berandung der Ziel-Ladeeinheit 14 gestoppt. Beispielsweise kann der Gegenstand 12 durch eine auffedernde Pappverpackung oder durch Verschmutzung an der Innenseite der Wand der Ziel-Ladeeinheit 14 vor Erreichen der Soll-Ablegeposition anstoßen, so dass seine Bewegung gestoppt wird. Das Anstoßen wird durch einen Anstoßsensor detektiert und signalisiert, und zwar getrennt für alle drei Raumrichtungen. Der Gegenstand 12 befindet sich gemäß Fig. 6 nun in einer Ist-Ablegeposition. Diese Ist-Ablegeposition wird dann abgespeichert und wird bei der Berechnung der Soll-Ablegeposition für einen weiteren in der Ziel-Ladeeinheit 14 abzulegenden Gegenstand berücksichtigt.

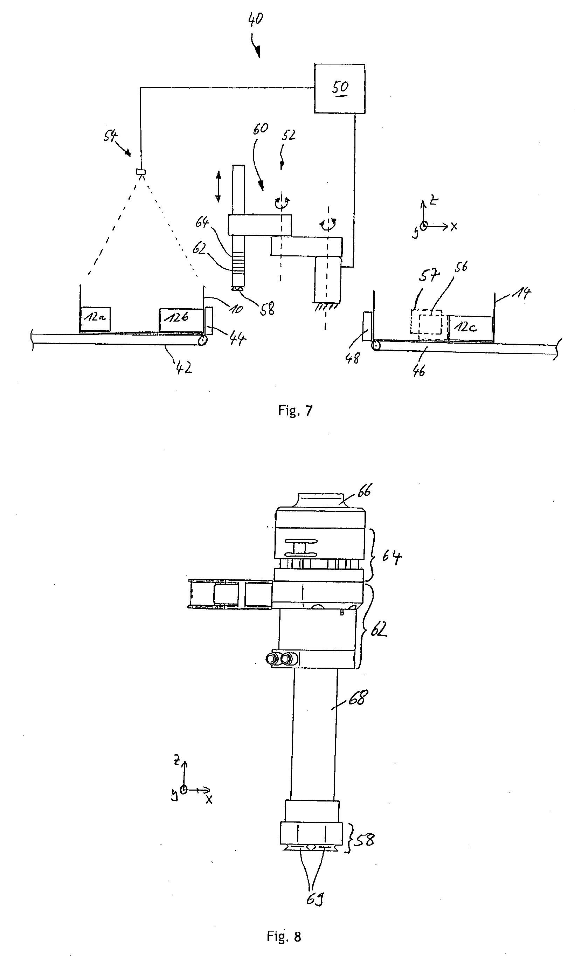

Die Darstellung der Fig. 7 zeigt schematisch eine erfindungsgemäße Kommissioniervorrichtung 40, die zum Befördern von Gegenständen 12a, 12b aus einer Quell-Ladeeinheit 10 in eine Ziel-Ladeeinheit 14 vorgesehen ist. In der Ziel-Ladeeinheit 14 befindet sich bereits ein Gegenstand 12c. Die Quell-Ladeeinheit 10 befindet sich auf einem Transportband 42, das beispielsweise aus einem Hochregallager zu der Kommissioniervorrichtung 40 führt. Die Quell-Ladeeinheit 10 befindet sich in einer vordefinierten Position und einer vordefinierten Ausrichtung, die durch einen schematisch dargestellten Anschlag 44 sichergestellt ist.

Die Ziel-Ladeeinheit 14 befindet sich auf einem Transportband 46, das beispielsweise zu einer Versandstelle führt. Die Ziel-Ladeeinheit 14 befindet sich in einer vordefinierten Position und in einer vordefinierten Ausrichtung, die durch einen schematisch dargestellten Anschlag 48 sichergestellt wird.

Die Kommissioniervorrichtung 40 weist eine zentrale Steuereinheit 50 auf, mit der sowohl ein Roboter 52 als auch ein Scanner 54 angesteuert wird.

Bei dem erfindungsgemäßen Kommissionierverfahrens wird mittels des Scanners 54 zunächst die Quell-Ladeeinheit 10 gescannt und die Positionen der darin befindlichen Gegenstände 12a, 12b werden erfasst. Die geometrischen Abmessungen und die Art bzw. der Inhalt der Gegenstände 12a, 12b sind der Steuereinheit 50 bekannt, beispielsweise aus einem Lagerverwaltungssystem. Die Steuereinheit 50 kann dann eine Pickposition eines der Gegenstände 12a, 12b bestimmen, also eine Position, an der einer der Gegenstände 12a, 12b aufgenommen werden soll. Nach dem Bestimmen einer Pick-Position wird in der Steuereinheit 50 eine Soll-Ablegeposition in der Ziel-Ladeeinheit 14 bestimmt. Eine Soll-Ablegeposition für den Gegenstand 12a ist in der Ziel-Ladeeinheit 14 durch die gestrichelte Umrandung 56 symbolisiert.

Nach dem 8estimmen der Soll-Ablegeposition 56 steuert die Steuereinheit 50 den Roboter 52 so an, dass eine Ansaugvorrichtung 58 an dem Roboterarm 60 zu dem Gegenstand 12a verfahren und auf der Oberseite des Gegenstandes 12a angeordnet wird. Mittels der Ansaugvorrichtung 58 kann der Gegenstand 12a gegriffen bzw. angesaugt werden und durch eine erneute 8ewegung des Roboterarms 60 wird der Gegenstand 12a dann in eine Zwischenposition 57 in der Ziel-Ladeeinheit 14 verfahren, wie bereits in der Fig. 4 dargestellt wurde und die in Fig. 7 mit strichpunktierten Linien angedeutet ist. Der Roboterarm 60 wird dann mit dem angesaugten Gegenstand 12a ausgehend von der Zwischenposition 57 in Richtung auf die Soll-Ablegeposition 56 bewegt, bis entweder die Soll-Ablegeposition 56 erreicht ist oder der Gegenstand 12a an der 8erandung der Ziel-Ladeeinheit 14 oder dem bereits in der Ziel-Ladeeinheit 14 befindlichen Gegenstand 12c anstößt.

Ein Anstoßen des Gegenstandes 12a wird mittels zweier Ausgleichseinheiten 62 und 64 an dem Arm 60 detektiert, die Anstoßsensoren bilden. Die Ausgleichseinheit 62 detektiert ein Anstoßen in der x- und y-Richtung und die Ausgleichseinheit 64 detektiert ein Anstoßen in der z-Richtung. Ein mittels der Ausgleichseinheiten 62, 64 detektiertes Anstoßen des Gegenstandes 12a wird an die Steuereinheit 50 gemeldet, woraufhin diese, wie anhand der Fig. 2 erläutert wurde, die erreichte Ist-Ablegeposition abspeichert.

Die Darstellung der Fig. 8 zeigt schematisch einen Abschnitt des Roboterarms 60, an dem die Ausgleichseinheiten 62 und 64 angeordnet sind. Die Ausgleichseinheit 64, die ein Anstoßen in der z-Richtung detektiert, ist unmittelbar an einem Roboterflansch 66 befestigt, der, siehe Fig. 7, an einer in z-Richtung verfahrbaren Stange angeordnet ist, die wiederum Teil des Roboterarms 60 bildet. An der Ausgleichseinheit 64 ist die weitere Ausgleichseinheit 62 montiert, die ein Anstoßen in x- und y-Richtung detektiert. An die Ausgleichseinheit 62 schließt sich ein Rüssel 68 an, der starr ausgebildet ist. Am unteren Ende des Rüssels 68 ist die Ansaugvorrichtung 58 angeordnet, die in der Darstellung der Fig. 8 nur schematisch gezeigt ist und die beispielsweise vier Saugnäpfe 69 aufweist. Der Rüssel 68 und die Ansaugvorrichtung 58 sind bezüglich ihres Querschnitts in der x-y-Ebene so bemessen, dass ihr Querschnitt kleiner oder gleich dem OuerschniU eines kleinsten aufzunehmenden Gegenstandes ist. Der Rüssel 68 mit der Ansaugvorrichtung 58 kann dadurch beispielsweise auch zwischen zwei Gegenständen in der Quell-Ladeeinheit einfahren, um einen Gegenstand am Boden der Quell-Ladeeinheit anzusaugen und dadurch aufzunehmen. Eine Länge des Rüssels 68 ist so bemessen, dass auch kleine Gegenstände vom Boden der Ouell-Ladeeinheit aufgenommen und auch wieder am Boden der Ziel-Ladeeinheit abgesetzt werden können.

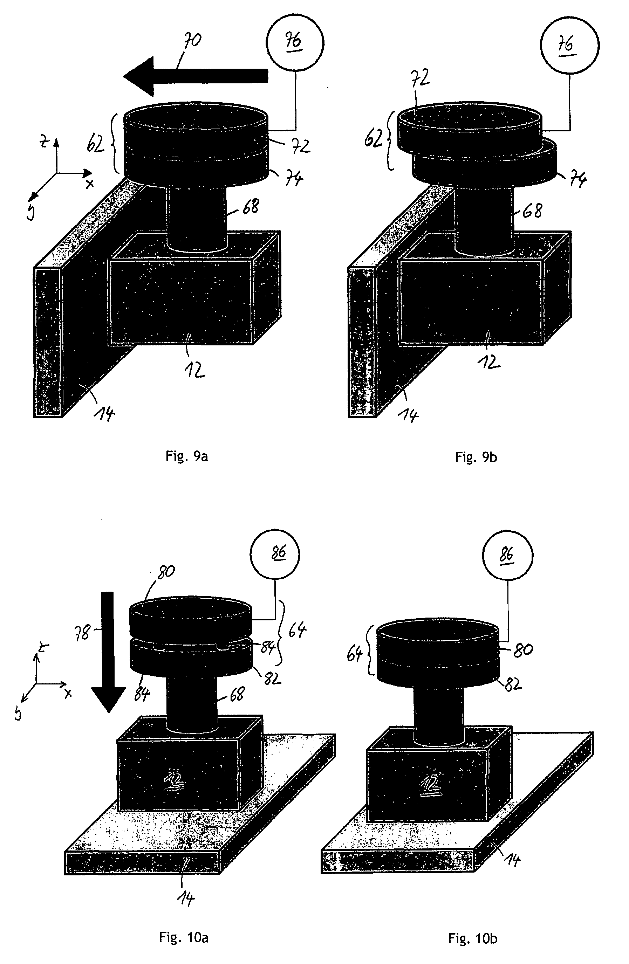

Die Darstellungen der Fig. 9a und 9b verdeutlichen schematisch die Wirkungsweise der Ausgleichseinheit 62.

In Fig. 9a ist ein Gegenstand 12 dargestellt, der an dem Rüssel 68 gehalten ist, wobei zur Vereinfachung die Ansaugvorrichtung nicht dargestellt ist. Oberhalb des Rüssels 68 ist die Ausgleichseinheit 62 dargestellt. Der Gegenstand 12 wird mit dem Roboter 52, siehe Fig. 7 in einer Richtung bewegt, die durch einen Pfeil 70 dargestellt ist. Der Gegenstand 12 befindet sich noch kurz vor einer Seitenwand der Ziel-Ladeeinheit 14. Die Ausgleichseinheit 62 weist ein oberes, scheibenförmiges Bauteil 72 und ein unteres, scheibenförmiges Bauteil 74 auf, die mittels Gleitführungen miteinander verbunden sind. Diese Gleitführungen erlauben eine Verschiebung der beiden Bauteile 72, 74 zueinander sowohl in x-Richtung als auch in y-Richtung. Schematisch dargestellt ist ein Sensor 76, der eine Verschiebung der beiden Bauteile 72, 74 in x-Richtung detektieren und signalisieren kann sowie, separat hierzu, auch eine Verschiebung der beiden Bauteile 72, 74 in y-Richtung.

In Fig. 9b ist die Situation dargestellt, wenn der Gegenstand 12 an die Seitenwand der Ziel-Ladeeinheit 14 angestoßen ist. Durch das Anstoßen wird das untere Bauteil 74 der Ausgleichseinheit 62 gestoppt, wohingegen sich das obere Bauteil 72 zusammen mit dem Roboterarm 60 noch weiter entgegen der x-Richtung bewegt. Dadurch verschieben sich die beiden Bauteile 72, 74 zueinander in x-Richtung. Diese Verschiebung wird mittels des Sensors 76 detektiert und an die Steuereinheit 50 signalisiert, siehe Fig. 7. Die Bewegung des Roboterarms 60 wird daraufhin gestoppt und die erreichte Position als Ist-Ablegeposition des Gegenstands 12 abgespeichert.

Wie bereits ausgeführt wurde, kann mit der Ausgleichseinheit 62 ein Anstoßen in x-Richtung als auch in y-Richtung getrennt erfasst und signalisiert werden. Mittels der Ausgleichseinheit 62 und dem Sensor 76 können somit die x- und y- Koordinaten einer Ist-Ablegeposition ermittelt werden.

Die Darstellungen der Fig. 10a und 10b sollen die Wirkungsweise der Ausgleichseinheit 64 durch eine schematische Darstellung verdeutlichen.

Ein Gegenstand 12 ist an dem Rüssel 68 des Roboterarms 60 angeordnet, wobei zur Vereinfachung der Darstellung wieder die Ansaugvorrichtung nicht dargestellt ist. Der Gegenstand 12 befindet sich in der in Fig. 10 linken Darstellung kurz oberhalb einer Bodenfläche der Ziel-Ladeeinheit 14. Ausgehend von der in Fig. 10 links dargestellten Position wird der Gegenstand 12 dann gemäß dem Pfeil 78 entgegen der z-Richtung bewegt.

Die Ausgleichseinheit 64 weist ein erstes scheibenförmiges Bauteil 80 und ein zweites scheibenförmiges Bauteil 82 auf, wobei die Bauteile 80, 82 über Führungsstangen 84 in z-Richtung zueinander beweglich miteinander verbunden sind. Eine Verschiebung der Bauteile 80, 82 in oder entgegen der z-Richtung zueinander wird mittels eines Sensors 86 detektiert und signalisiert.

Die Fig. 10b zeigt den Zustand, wenn der Gegenstand 12 nach der Bewegung gemäß dem Pfeil 78 entgegen der z-Richtung an der Bodenfläche der Ziel-Ladeeinheit 14 angestoßen ist. Das untere Bauteil 82 der Ausgleichseinheit 64 wird dadurch gestoppt, wohingegen das obere Bauteil 80 noch weiter entgegen der z-Richtung in Richtung auf das untere Bauteil 82 bewegt wird. Diese Verschiebung der beiden Bauteile 80, 82 wird mittels des Sensors 86 detektiert und dann, siehe Fig. 7 an die Steuereinheit 50 gemeldet, die die in Fig. 10 rechts erreichte Position des Gegenstandes 12 dann als Ist-Ablegeposition abspeichert.

## Patentansprüche

1. Verfahren zum Kommissionieren mit einer automatischen Kommissioniervorrichtung, wobei wenigstens ein zu kommissionierender erster Gegenstand (12a) von einer Quell-Ladeeinheit (10) in eine Ziel-Ladeeinheit (14) mittels einer Greifvorrichtung (58) befördert wird, mit folgenden Schritten:
Scannen der Quell- Ladeeinheit (10) und Bestimmen einer Pick-Position eines mit der Greifvorrichtung (58) aufzunehmenden Gegenstandes in der Quell-Ladeeinheit Aufnehmen des ersten Gegenstandes (12a) in der Quell- Ladeeinheit (10),
Berechnen einer Soll-Ablegeposition (56) für den ersten Gegenstand (12a) in der Ziel-Ladeeinheit (14), wobei die Soll-Ablegeposition (56) an eine Berandung der Ziel- Ladeeinheit (14) und/oder an wenigstens einen bereits in der Ziel- Ladeeinheit (14) befindlichen zweiten Gegenstand (12c) angrenzt,
Bewegen des ersten Gegenstandes (12a) zu einer Zwischenposition (57), wobei sich die Zwischenposition (57) aus der berechneten Soll -Ablegeposition (56) in der Ziel- Ladeeinheit (14) und einem Sicherheitsabstand von der Berandung der Ziel- Ladeeinheit (14) und/oder wenigstens einem bereits in der Ziel-Ladeeinheit (14) befindlichen zweiten Gegenstand (12c) ergibt, und
Ausgehend von der Zwischenposition (57), Bewegen des ersten Gegenstandes (12a) mittels der Greifvorrichtung (58) in Richtung auf die Soll-Ablegeposition (56) bis zum Erreichen der Soll-Ablegeposition (56), bis die Bewegung durch Anstoßen an die Berandung der Ziel- Ladeeinheit (14) und/oder Anstoßen an den zweiten Gegenstand (12c) an einer Ist-Ablegeposition gestoppt wird.

2. Verfahren nach Anspruch 1, weiter **gekennzeichnet durch** Anordnen der Ziel- Ladeeinheit (14) an einer vordefinierten Position und in einer vordefinierten Ausrichtung.

3. Verfahren nach Anspruch 1 oder 2, **gekennzeichnet durch** Anordnen der Quell- Ladeeinheit (10) an einer vordefinierten Position und in einer vordefinierten Ausrichtung.

4. Verfahren nach einem der vorstehenden Ansprüche, **dadurch gekennzeichnet, dass** die erreichte Ist-Ablegeposition abgespeichert wird.

5. Verfahren nach einem der vorstehenden Anspräche, **gekennzeichnet durch** Berechnen der Soll-Ablegeposition unter Berücksichtigung der Ist-Ablegepositionen bereits in der Ziel-Ladeeinheit (14) befindlicher Gegenstände.

6. Kommissioniervorrichtung zum Durchführen des Verfahrens nach einem der vorstehenden Ansprüche, mit einem bewegbaren Arm (60), einer an dem Arm (60) angeordneten Greifvorrichtung (58) und einer Steuereinheit (50) zur Steuerung des Arms (60) und der Greifvorrichtung (58), **dadurch gekennzeichnet, dass** der Arm (60) mit einem Anstoßsensor (76, 86) versehen ist, der ein Abstoppen einer Bewegung eines mit der Greifvorrichtung (58) gehaltenen Gegenstandes (12) in wenigstens einer Raumrichtung detektiert, und dass der Arm (60) mit wenigstens einer Ausgleichseinheit (62, 64) mit einem Anstoßsensor (76, 86) versehen ist, wobei der Anstoßsensor (76, 86) eine Verschiebung zweier Bauteile der Ausgleichseinheit (62, 64) detektiert.

7. Kommissioniervorrichtung nach Anspruch 6, **dadurch gekennzeichnet, dass** die Greifvorrichtung als Ansaugvorrichtung (58) zum Halten eines zu kommissionierenden Gegenstandes ausgebildet ist.

8. Kommissioniervorrichtung nach Anspruch 7, **dadurch gekennzeichnet, dass** der Greifarm (60) zwei Ausgleichseinheiten (62, 64) aufweist, wobei eine erste Ausgleichseinheit (62) ein Abstoppen einer Bewegung in x- und/oder y-Richtung und eine zweite Ausgleichseinheit (64) ein Abstoppen einer Bewegung in z-Richtung detektiert.

## Claims

1. The method of commissioning with the automatic device for commissioning where at least one of a commissioned first object (12a) is transferred from a source loading unit (10) to a target loading unit (14) with use of a catching device (58) in following stages:
Scanning of a source loading unit (10) and marking a choice position of a lifted object by a catching device (58) in a source loading unit,
Lifting of a first object (12a) in a source loading unit (10),
Calculating of a given put away position (56) for a first object (12a) in a target loading unit (14) where given put away position (56) adjoins with an edge of a target loading unit (14) and/or with at least one other object (12c), present in a target loading unit (14),
Displacement of a first object (12a) to a temporary position (57) where a temporary position (57) is a result from calculated given put away position (56) in a target loading unit (14) and a safety distance from an edge of a target loading unit (14) or at least one other object (12c) present in a target loading unit (14) and
Exiting from a temporary position (57), displacement of a first object (12a) with use of a catching device (58) in a direction of a given put away position (56) until reaching a given put away position (56), until stopping movement due to pushing against an edge of a target loading unit (14) or pushing against other object (12c) in a current put away position.

2. The method according to the claim 1, **characterized by** placing a target loading unit (14) in preliminary specified position with preliminary specified orientation.

3. The method according to the claim 1 or 2, **characterized by** placing a source loading unit (10) in initially specified position with initially specified orientation.

4. The method according to one of the previous claims **characterized by** that the achieved real put away position is recorded.

5. The method according to one of the above mentioned claims **characterized by** calculation of a given put away position with taking into consideration the real put away position of objects already located in a target loading unit (14).

6. The device for commissioning for realization of the method according to one of the previous claims with a movable arm (60), a catching device (58) and a control unit (50) for controlling an arm (60)) and a catching device (58) located on an arm (60, **characterized by** that an arm (60) is equipped in a contact sensor (76, 86) detecting stop of an object (12) movement held by a catching device (58) in at least one spatial direction and that an arm (60) is equipped with at least one aligning unit (62, 64) with a contact sensor (76, 86) while a contact sensor (76, 86) detects displacement of two parts of a aligning unit (62, 64).

7. The device for commissioning according to the claim 6 **characterized by** that a catching device is made as a suction device (58) for holding a commissioned object.

8. The device for commissioning according to the claim 7 **characterized by** that a catching arm (60) contains two aligning units (62, 64) where the first aligning unit (62) detects stop of movement in the direction x and/or direction y and the second aligning unit (64) stop of movement in the direction z.

## Revendications

1. Procédé de préparation de commandes avec un dispositif automatique pour la préparation de commandes, où au moins un premier objet préparé (12a) est transféré à partir d'une unité de charge source (10) vers l'unité de charge cible (14) par un dispositif de préhension (58), dans les étapes suivantes :
Le balayage de l'unité de charge source (10) et la détermination de la position de sélection de l'objet soulevé par le dispositif de préhension (58) dans l'unité de charge cible.
Le levage du premier objet (12a) dans l'unité de charge source (10).
Le calcul de la position cible du dépôt (56) pour le premier objet (12a) dans l'unité de charge cible (14), où la position cible du dépôt (56) longe le bord de l'unité de charge cible (14) et / ou avec au moins un autre objet (12c), qui se trouve déjà dans l'unité de charge cible (14).
Le déplacement du premier objet (12a) vers une position intermédiaire (57), où la position intermédiaire (57) résulte de la position de dépôt calculée (56) dans l'unité de charge cible (14) et de la distance de sécurité par rapport au bord de l'unité de charge cible (14) ou au moins d'un autre objet (12c) se trouvant dans l'unité de charge cible (14), et
En partant d'une position intermédiaire (57), le déplacement du premier objet (12a) avec un dispositif de préhension (58) vers la position cible de dépôt (56) pour obtenir la position cible de dépôt (56), jusqu'à l'arrêt du mouvement par le fait de l'approcher au bord de l'unité de charge cible (14) ou à un autre objet (12c) dans la position actuelle du dépôt.

2. Procédé selon la revendication 1, **caractérisé en ce que** l'unité de charge cible (14) est placée dans une position prédéterminée et avec une orientation prédéterminée.

3. Procédé selon la revendication 1 ou 2, **caractérisé en ce que** l'unité de charge source (10) est placée dans une position prédéterminée et avec une orientation prédéterminée.

4. Procédé selon l'une quelconque des revendications précédentes, **caractérisé en ce que** la position réelle atteinte de dépôt est enregistrée.

5. Procédé selon l'une quelconque des revendications précédentes, **caractérisé par** le calcul de la position cible de dépôt, en tenant compte de positions réelles de dépôt d'objets se trouvant déjà dans l'unité de charge cible (14).

6. Le dispositif pour la préparation de commandes servant à exécuter le procédé selon l'une quelconque des revendications précédentes, comprenant un bras mobile (60) disposé sur un bras (60) au moyen d'un dispositif de préhension (58) et d'une unité de commande (50) pour commander le bras (60) et le dispositif de préhension (58), **caractérisé en ce que** le bras (60) est muni d'un capteur de contact (76, 86) qui détecte l'arrêt du mouvement de l'objet (12) maintenu par le dispositif de préhension (58) dans au moins une direction de l'espace, et **en ce que** le bras (60) est pourvu d'au moins une unité d'égalisation (62, 64) avec un capteur de contact (76, 86), le capteur de contact (76, 86) détectant un déplacement des deux parties de l'unité d'égalisation (62, 64).

7. Le dispositif pour la préparation de commandes selon la revendication 6, **caractérisé en ce que** le dispositif de préhension est fait comme dispositif d'aspiration (58) pour maintenir l'objet préparé.

8. Le dispositif pour la préparation de commandes selon la revendication 6, **caractérisé en ce que** le bras de préhension (60) comprend deux unités d'égalisation (62, 64), où la première unité d'égalisation (62) détecte l'arrêt du mouvement dans la direction x et / ou la direction y, et la seconde unité d'égalisation (64) l'arrêt du mouvement dans la direction z.
